(19) **Europäisches Patentamt European Patent Office Office européen des brevets**

(11) **EP 4 694 250 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
**H04W 12/033** (2021.01)

(21) Application number: **24792112.5**

(22) Date of filing: **19.04.2024**

(52) Cooperative Patent Classification (CPC):
**H04B 17/30; H04W 12/033**

(86) International application number:
**PCT/CN2024/088748**

(87) International publication number:
**WO 2024/217527 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.04.2023 CN 202310443093**

(71) Applicant: **Huawei Technologies Co., Ltd.
Shenzhen, Guangdong 518129 (CN)**

(72) Inventors:
• **SHI, Shuyu
Nanjing, Jiangsu 210093 (CN)**

• **WANG, Wei
Nanjing, Jiangsu 210093 (CN)**
• **DU, Rui
Shenzhen, Guangdong 518129 (CN)**
• **NAREN, Gerile
Shenzhen, Guangdong 518129 (CN)**
• **HAN, Xiao
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS, AND STORAGE MEDIUM**

(57) A communication method, an apparatus, and a storage medium are provided. The method includes: A first device scrambles at least two fields of a sensing signal based on a scrambling parameter, and sends the scrambled sensing signal to a second device; and the second device descrambles the at least two fields of the scrambled sensing signal based on the scrambling parameter, to implement sensing measurement and ensure security of the sensing measurement.

[FIG. 4]

## Description

This application claims priority to Chinese Patent Application No. 202310443093.4, filed with the China National Intellectual Property Administration on April 21, 2023 and entitled "COMMUNICATION METHOD, APPARATUS, AND STORAGE MEDIUM", which is incorporated herein by reference in its entirety.

## TECHNICAL FIELD

This application relates to the field of communication technologies, and in particular, to a communication method, an apparatus, and a storage medium.

## BACKGROUND

With development of wireless communication technologies, various wireless communication devices, such as mobile phones, computers, wireless routers, and smart home devices, have been widely integrated into daily life. In a process in which a wireless communication device performs communication in a wireless manner, a sensing target (including a person and/or an object) in a propagation range causes interference to propagation of a radio wave, and a receive end may sense the sensing target by detecting a change of a radio channel.

Because the radio wave may be received by any terminal, in other words, any receive end may sense a status of the sensing target in the propagation range through the radio wave, for example, an action of a human body or movement of an object, privacy security of a user cannot be ensured in this case. Therefore, how to implement secure sensing in an integrated communication and sensing system is an urgent problem to be resolved currently.

## SUMMARY

Embodiments of this application provide a communication method, an apparatus, and a storage medium, to implement secure sensing in an integrated communication and sensing system.

According to a first aspect, an embodiment of this application provides a communication method, including: A first device scrambles at least two fields of a sensing signal based on a scrambling parameter; and the first device sends the scrambled sensing signal to a second device.

According to the communication method provided in the first aspect, the first device scrambles the at least two fields of the sensing signal based on the scrambling parameter, and sends the scrambled sensing signal to the second device; and the second device descrambles the at least two fields of the scrambled sensing signal based on the scrambling parameter, to implement sensing measurement and ensure security of the sensing measurement.

To enable the second device to descramble the scrambled sensing signal, the first device and the second device may synchronize the scrambling parameter, or synchronize related information for generating the scrambling parameter.

In an example, the first device sends first indication information to the second device, where the first indication information indicates the scrambling parameter. In this case, the first device may be a sending node, that is, a process in which the first device sends the sensing signal to the second device is a downlink sensing process. In another example, the first device receives first indication information sent by the second device, where the first indication information indicates the scrambling parameter. In this case, the second device may be a sending node, that is, a process in which the first device sends the sensing signal to the second device is an uplink sensing process.

In a possible implementation, a first field in the first indication information includes an index of a pseudo-random sequence used for time sequence scrambling, the first field indicates a linear predictive coding (linear predictive coding, LPC) parameter, the LPC parameter is used to determine N scrambling sequences respectively corresponding to N PPDUs of the sensing signal, and N is a positive integer. Both the first device and the second device may determine the scrambling parameter based on the LPC parameter, to scramble and/or descramble the at least two fields of the sensing signal based on the scrambling parameter.

In a possible implementation, a second field in the first indication information includes an index of a pseudo-random sequence used for amplitude scrambling, the second field indicates an amplitude variation of an $m^{th}$ subcarrier in M subcarriers of the sensing signal, M is a positive integer, the amplitude variation of the $m^{th}$ subcarrier is used to adjust an $m^{th}$ scrambling factor in M scrambling factors, and the $m^{th}$ scrambling factor is used to scramble the $m^{th}$ subcarrier. The first device and the second device may synchronize an amplitude variation corresponding to each subcarrier, to scramble and/or descramble the at least two fields of the sensing signal in an amplitude dimension.

In a possible implementation, a third field in the first indication information includes an index of a pseudo-random sequence used for phase scrambling, the third field indicates a time offset, the time offset is used to determine a phase offset of the $m^{th}$ subcarrier in the M subcarriers of the sensing signal, and M is a positive integer. The first device and the second device may synchronize a phase offset corresponding to each subcarrier, to scramble and/or descramble the at least two fields of the sensing signal in a phase dimension.

In a possible implementation, the time offset is less than or equal to a maximum delay spread of a channel carrying the sensing signal, to avoid a large time offset. If the time offset is large, coherent bandwidth fails to meet a requirement, resulting in inter-symbol interference (inter-symbol inference, ISI).

In a possible implementation, a dimension index field in the first indication information indicates at least one of the following: whether the scrambling parameter is used to scramble the sensing signal in a time sequence dimension; whether the scrambling parameter is used to scramble the sensing signal in an amplitude dimension; and whether the scrambling parameter is used to scramble the sensing signal in a phase dimension. A scrambling dimension may be selected, and scrambling of the at least two fields of the sensing signal is flexibly controlled by flexibly indicating the scrambling parameter.

In a possible implementation, an LPC indication field in the first indication information indicates a manner of obtaining the LPC parameter, and the manner of obtaining the LPC parameter includes obtaining based on a codebook or indication by using second indication information. Flexible scheduling between at least two obtaining manners is implemented by indicating the manner of obtaining the LPC parameter.

In a possible implementation, a fourth field in the first indication information indicates a sensing counter encrypted based on a key synchronized between the first device and the second device, and the sensing counter indicates a quantity of transmitted PPDUs in the sensing signal. This ensures a time sequence of the PPDUs in the sensing measurement process.

In a possible implementation, the first device sends a key to the second device; or the first device receives a key sent by the second device; and the key is configured to: generate a pseudo-random sequence; and/or encrypt information synchronized between the first device and the second device. After the key is synchronized between the first device and the second device, subsequent secure sensing measurement between the first device and the second device is completed.

In a possible implementation, the key is included in a connection setup request. The key is synchronized during connection setup to ensure security of subsequent sensing measurement.

In a possible implementation, the first indication information is carried in first information and/or second information; the first information indicates to generate the scrambling parameter; and the second information indicates to update the scrambling parameter. When the first indication information is carried in the first information, the first device and the second device may generate the scrambling parameter based on the first indication information, and scramble and/or descramble the at least two fields of the sensing signal based on the scrambling parameter. When the first indication information indicates to update the scrambling parameter, the first device and the second device may update the scrambling parameter based on the first indication information, and scramble and/or descramble the at least two fields of the sensing signal based on the updated scrambling parameter. This further improves security of sensing measurement.

Optionally, the first information is a sensing measurement setup request frame. In a sensing instance phase, the sensing signal may be scrambled based on the scrambling parameter generated based on the first indication information, to avoid that the first indication information needs to be synchronized and/or the scrambling parameter needs to be determined each time the PPDU is sent.

Optionally, the second information is a null data packet announcement or a trigger frame. A scrambling parameter may be indicated for a currently transmitted PPDU, to reduce an indication granularity. This implements flexible scrambling control.

In a possible implementation, a first field in the second information is different from a first field in the first information, and a sensing counter indicated by a fourth field in the second information is set to zero, to avoid impact of a change of the scrambling parameter in the time sequence dimension on a sensing time sequence in a sensing process.

In a possible implementation, the method further includes: The first device receives a sensing result sent by the second device, where the sensing result occupies a first time-frequency resource, and the first time-frequency resource is used to transmit the sensing signal. Sending the sensing result in the first time-frequency resource allocated (or preempted) to the sensing signal can reduce transmission resource overheads.

According to a second aspect, an embodiment of this application provides a communication method, including: A second device receives a scrambled sensing signal sent by a first device, where at least two fields of the sensing signal are scrambled based on a scrambling parameter; and the second device descrambles the at least two fields of the sensing signal based on the scrambling parameter.

In a possible implementation, the method further includes: The second device receives first indication information sent by the first device, where the first indication information indicates the scrambling parameter.

In a possible implementation, the method further includes: The second device sends first indication information to the first device, where the first indication information indicates the scrambling parameter.

In a possible implementation, a first field in the first indication information includes an index of a pseudo-random sequence used for time sequence scrambling, the first field indicates a linear predictive coding LPC parameter, the LPC parameter is used to determine N scrambling sequences respectively corresponding to N PPDUs of the sensing signal, and N is a positive integer.

In a possible implementation, a second field in the first indication information includes an index of a pseudo-random sequence used for amplitude scrambling, the second field indicates an amplitude variation of an $m^{th}$ subcarrier in M subcarriers of the sensing signal, M is a positive integer, the amplitude variation of the $m^{th}$ subcarrier is used to adjust an $m^{th}$ scrambling factor in M scrambling factors, and the $m^{th}$ scrambling factor is used to descramble the $m^{th}$ subcarrier.

In a possible implementation, a third field in the first indication information includes an index of a pseudo-random sequence used for phase scrambling, the third field indicates a time offset, the time offset is used to determine a phase offset of the $m^{th}$ subcarrier in the M subcarriers of the sensing signal, and M is a positive integer.

In a possible implementation, the time offset is less than or equal to a maximum delay spread of a channel carrying the sensing signal.

In a possible implementation, a dimension index field in the first indication information indicates at least one of the following: whether the scrambling parameter is used to scramble the sensing signal in a time sequence dimension; whether the scrambling parameter is used to scramble the sensing signal in an amplitude dimension; and whether the scrambling parameter is used to scramble the sensing signal in a phase dimension.

In a possible implementation, an LPC indication field in the first indication information indicates a manner of obtaining the LPC parameter, and the manner of obtaining the LPC parameter includes obtaining based on a codebook or indication by using second indication information.

In a possible implementation, a fourth field in the first indication information indicates a sensing counter encrypted based on a key synchronized between the first device and the second device, and the sensing counter indicates a quantity of transmitted PPDUs in the sensing signal.

In a possible implementation, the second device receives a key sent by the first device; or the second device sends a key to the first device; and the key is configured to: generate a pseudo-random sequence; and/or encrypt information synchronized between the first device and the second device.

In a possible implementation, the key is included in a connection setup request.

In a possible implementation, the first indication information is carried in first information and/or second information; the first information indicates to generate the scrambling parameter; and the second information indicates to update the scrambling parameter.

In a possible implementation, the first information is a sensing measurement setup request frame.

In a possible implementation, the second information is a null data packet announcement or a trigger frame.

In a possible implementation, a first field in the second information is different from a first field in the first information, and a sensing counter indicated by a fourth field in the second information is set to zero,

In a possible implementation, the method further includes: The second device sends a sensing result to the first device, where the sensing result occupies a first time-frequency resource, and the first time-frequency resource is used to transmit the sensing signal.

According to a third aspect, an embodiment of this application provides a communication apparatus, including: a processing module, configured to scramble at least two fields of a sensing signal based on a scrambling parameter; and a transceiver module, configured to send the scrambled sensing signal to a second device.

In a possible implementation, the transceiver module is further configured to send first indication information to the second device, where the first indication information indicates the scrambling parameter.

In a possible implementation, the transceiver module is further configured to receive first indication information sent by the second device, where the first indication information indicates the scrambling parameter.

In a possible implementation, a first field in the first indication information includes an index of a pseudo-random sequence used for time sequence scrambling, the first field indicates a linear predictive coding LPC parameter, the LPC parameter is used to determine N scrambling sequences respectively corresponding to N PPDUs of the sensing signal, and N is a positive integer.

In a possible implementation, a second field in the first indication information includes an index of a pseudo-random sequence used for amplitude scrambling, the second field indicates an amplitude variation of an $m^{th}$ subcarrier in M subcarriers of the sensing signal, M is a positive integer, the amplitude variation of the $m^{th}$ subcarrier is used to adjust an $m^{th}$ scrambling factor in M scrambling factors, and the $m^{th}$ scrambling factor is used to scramble the $m^{th}$ subcarrier.

In a possible implementation, a third field in the first indication information includes an index of a pseudo-random sequence used for phase scrambling, the third field indicates a time offset, the time offset is used to determine a phase offset of the $m^{th}$ subcarrier in the M subcarriers of the sensing signal, and M is a positive integer.

In a possible implementation, the time offset is less than or equal to a maximum delay spread of a channel carrying the sensing signal.

In a possible implementation, a dimension index field in the first indication information indicates at least one of the following: whether the scrambling parameter is used to scramble the sensing signal in a time sequence dimension; whether the scrambling parameter is used to scramble the sensing signal in an amplitude dimension; and whether the scrambling parameter is used to scramble the sensing signal in a phase dimension.

In a possible implementation, an LPC indication field in the first indication information indicates a manner of obtaining the LPC parameter, and the manner of obtaining the LPC parameter includes obtaining based on a codebook or indication by using second indication information.

In a possible implementation, a fourth field in the first indication information indicates a sensing counter encrypted based on a key synchronized between the first device and the second device, and the sensing counter indicates a quantity of transmitted PPDUs in the sensing signal.

In a possible implementation, the transceiver module is further configured to: send a key to the second device; or receive a key sent by the second device, and the key is configured to: generate a pseudo-random sequence; and/or encrypt information synchronized between the first device and the second device.

In a possible implementation, the key is included in a connection setup request.

In a possible implementation, the first indication information is carried in first information and/or second information; the first information indicates to generate the scrambling parameter; and the second information indicates to update the scrambling parameter.

In a possible implementation, the first information is a sensing measurement setup request frame.

In a possible implementation, the second information is a null data packet announcement or a trigger frame.

In a possible implementation, a first field in the second information is different from a first field in the first information, and a sensing counter indicated by a fourth field in the second information is set to zero,

In a possible implementation, the transceiver module is further configured to receive a sensing result sent by the second device, where the sensing result occupies a first time-frequency resource, and the first time-frequency resource is used to transmit the sensing signal.

According to a fourth aspect, an embodiment of this application provides a communication apparatus, including: a transceiver module, configured to receive a scrambled sensing signal sent by a first device, where at least two fields of the sensing signal are scrambled based on a scrambling parameter; and a processing module, configured to descramble the at least two fields of the sensing signal based on the scrambling parameter.

In a possible implementation, the transceiver module is further configured to receive first indication information sent by the first device, where the first indication information indicates the scrambling parameter.

In a possible implementation, the transceiver module is further configured to send first indication information to the first device, where the first indication information indicates the scrambling parameter.

In a possible implementation, a first field in the first indication information includes an index of a pseudo-random sequence used for time sequence scrambling, the first field indicates a linear predictive coding LPC parameter, the LPC parameter is used to determine N scrambling sequences respectively corresponding to N PPDUs of the sensing signal, and N is a positive integer.

In a possible implementation, a second field in the first indication information includes an index of a pseudo-random sequence used for amplitude scrambling, the second field indicates an amplitude variation of an $m^{th}$ subcarrier in M subcarriers of the sensing signal, M is a positive integer, the amplitude variation of the $m^{th}$ subcarrier is used to adjust an $m^{th}$ scrambling factor in M scrambling factors, and the $m^{th}$ scrambling factor is used to descramble the $m^{th}$ subcarrier.

In a possible implementation, a third field in the first indication information includes an index of a pseudo-random sequence used for phase scrambling, the third field indicates a time offset, the time offset is used to determine a phase offset of the $m^{th}$ subcarrier in the M subcarriers of the sensing signal, and M is a positive integer.

In a possible implementation, the time offset is less than or equal to a maximum delay spread of a channel carrying the sensing signal.

In a possible implementation, a dimension index field in the first indication information indicates at least one of the following: whether the scrambling parameter is used to scramble the sensing signal in a time sequence dimension; whether the scrambling parameter is used to scramble the sensing signal in an amplitude dimension; and whether the scrambling parameter is used to scramble the sensing signal in a phase dimension.

In a possible implementation, an LPC indication field in the first indication information indicates a manner of obtaining the LPC parameter, and the manner of obtaining the LPC parameter includes obtaining based on a codebook or indication by using second indication information.

In a possible implementation, a fourth field in the first indication information indicates a sensing counter encrypted based on a key synchronized between the first device and the second device, and the sensing counter indicates a quantity of transmitted PPDUs in the sensing signal.

In a possible implementation, the transceiver module is further configured to receive a key sent by the first device; or send a key to the first device, and the key is configured to: generate a pseudo-random sequence; and/or encrypt information synchronized between the first device and the second device.

In a possible implementation, the key is included in a connection setup request.

In a possible implementation, the first indication information is carried in first information and/or second information; the first information indicates to generate the scrambling parameter; and the second information indicates to update the scrambling parameter.

In a possible implementation, the first information is a sensing measurement setup request frame.

In a possible implementation, the second information is a null data packet announcement or a trigger frame.

In a possible implementation, a first field in the second information is different from a first field in the first information, and a sensing counter indicated by a fourth field in the second information is set to zero,

In a possible implementation, the transceiver module is further configured to send a sensing result to the first device, where the sensing result occupies a first time-frequency resource, and the first time-frequency resource is used to transmit the sensing signal.

According to a fifth aspect, an embodiment of this application provides a communication device, including a processor and a memory. The memory is configured to store a computer program, and the processor is configured to invoke the computer program stored in the memory and run the computer program, to perform the method in any one of the first aspect, the second aspect, or the possible implementations.

According to a sixth aspect, an embodiment of this application provides a chip, including a processor, configured to invoke computer instructions from a memory and run the computer instructions, so that a device in which the chip is installed performs the method in any one of the first aspect, the second aspect, or the possible implementations.

According to a seventh aspect, an embodiment of this application provides a computer-readable storage medium, configured to store computer program instructions, and the computer program enables a computer to perform the method in any one of the first aspect, the second aspect, or the possible implementations.

According to an eighth aspect, an embodiment of this application provides a computer program product, including computer program instructions. The computer program instructions enable a computer to perform the method in any one of the first aspect, the second aspect, or the possible implementations.

According to a ninth aspect, an embodiment of this application provides an apparatus, including a logic circuit and an input/output interface. The input/output interface is configured to receive a signal from a communication apparatus other than the apparatus and transmit the signal to the logic circuit, or send a signal from the logic circuit to a communication apparatus other than the apparatus. The logic circuit is configured to execute code instructions to implement the method in the first aspect, the second aspect, or the possible implementations.

For beneficial effect of the second aspect to the ninth aspect and the possible implementations, refer to the beneficial effect brought by the first aspect and the possible implementations of the first aspect. Details are not described herein again.

BRIEF DESCRIPTION OF DRAWINGS

FIG. 1 is a diagram of an architecture of a communication system according to an embodiment of this application;

FIG. 2 is a diagram of a radio sensing scenario according to an embodiment of this application;

FIG. 3 is a diagram of an application scenario according to an embodiment of this application;

FIG. 4 is a schematic interaction flowchart of a communication method according to an embodiment of this application;

FIG. 5a and FIG. 5b are schematic interaction flowcharts of a communication method according to an embodiment of this application;

FIG. 6 is a diagram of a secure sensing parameter element according to an embodiment of this application;

FIG. 7 is a diagram of phases of a sensing process according to an embodiment of this application;

FIG. 8 is a diagram of a structure of a sensing measurement setup request frame according to an embodiment of this application;

FIG. 9 is a schematic interaction flowchart of a communication method according to an embodiment of this application;

FIG. 10 is a schematic interaction flowchart of a communication method according to an embodiment of this application;

FIG. 11 is a block diagram of a communication apparatus according to an embodiment of this application; and

FIG. 12 is a block diagram of another communication apparatus according to an embodiment of this application.

DESCRIPTION OF EMBODIMENTS

The following describes technical solutions of this application with reference to accompanying drawings.

The communication method provided in this application may be applied to various communication systems, for example, a wireless local area network (wireless local area network, WLAN) system, a fifth generation (5th-Generation, 5G) communication system, a sixth generation (6th Generation, 6G) mobile communication system, another communication system, or a future communication system. The communication method provided in this application may be further applied to a communication system of near-distance communication, for example, a Bluetooth communication system or near field communication (near field communication, NFC).

The following is used as an example for description. Only the WLAN system is used as an example to describe an application scenario in embodiments of this application and a method in embodiments of this application.

A system architecture in this application includes one or more first wireless devices and one or more second wireless devices. The first wireless device may be an access point (access point, AP) station, and the second wireless device may be a non-access point (none access point station, non-AP STA) station. For ease of description, in this specification, the access point station is referred to as an access point (AP), and the non-access point station is referred to as a station (station, STA).

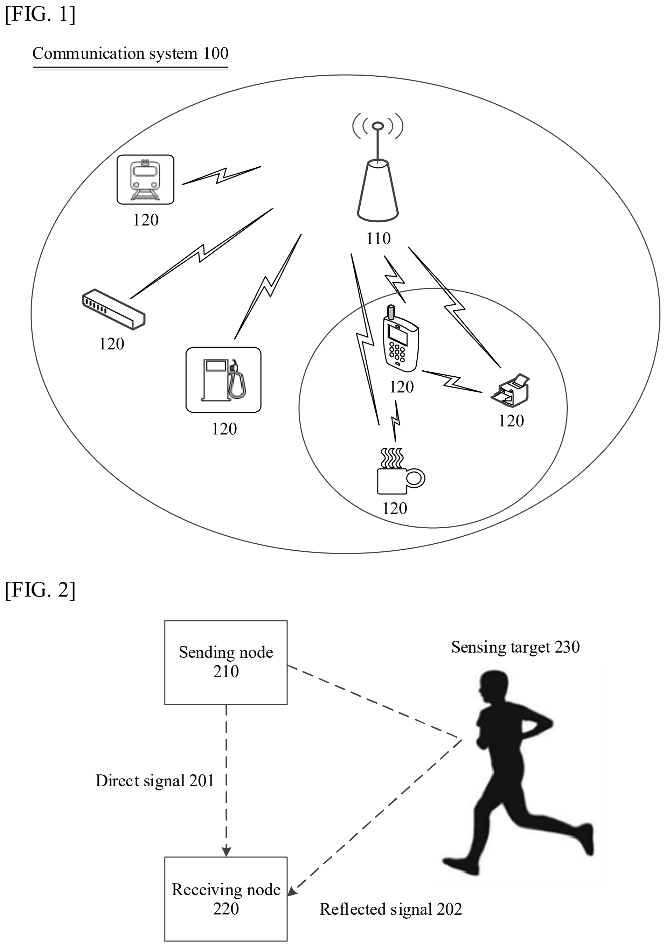

FIG. 1 is a diagram of an architecture of a communication system 100 according to an embodiment of this application. In FIG. 1, an example in which a first wireless device is an access point (that is, a device 110 in the communication system 100) and a second wireless device is a station (that is, a device 120 in the communication system 100) is used.

The access point may be an access point used by a terminal device to access a wired (or wireless) network, and is mainly deployed at home, in a building, and in a campus. A typical coverage radius is tens of meters to hundreds of meters. Certainly, the access point may alternatively be deployed outdoors. The access point is equivalent to a bridge that connects a wired network and a wireless network. The access point is mainly used to connect various wireless network clients together and then connect the wireless network to an ethernet. Specifically, the access point may be a terminal device (for example, a mobile phone) or a network device (for example, a router) with a wireless fidelity (wireless-fidelity, Wi-Fi) chip. The access point may be a device that supports an 802.11be standard or a standard after 802.11be.

The station may be a wireless communication chip, a wireless sensor, a wireless communication terminal, or the like. For example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, or a computer supporting a Wi-Fi communication function.

The access point and the station interact with each other by using a wireless network protocol, for example, a Wi-Fi protocol. The access point may send a downlink measurement packet, and coordinate the station to perform channel measurement. The station may feed back information to the access point based on a measurement result, so that the access point determines, based on the information fed back by the station, radio sensing or information in another field. It should be learned that there may be a plurality of stations in a coverage area of one access point, and the access point may perform proper resource scheduling on each station to improve a throughput, robustness, and the like of a system.

In the foregoing communication system (for example, the communication system 100), in a process of wireless communication between devices, wireless passive sensing may be performed by obtaining channel measurement data such as channel state information (channel state information, CSI). FIG. 2 is a diagram of a radio sensing scenario according to an embodiment of this application. In an application process of a radio sensing technology, devices participating in sensing may include a sending node (ISTA) 210 that sends a sensing signal and a receiving node (RSTA) 220 that receives a sensing signal. When the radio sensing technology is used to sense a human body motion, the sending node 210 sends a sensing signal to the receiving node 220, and the sensing signal received by the receiving node 220 includes a direct signal 201 and a reflected signal 202 reflected by a sensing target 230. In this way, when the sensing target 230 moves, the reflected signal 202 changes, and a superimposed sensing signal received by the receiving node 220 also changes accordingly. In this case, the receiving node 220 detects that a channel of a radio link changes (for example, a change in an amplitude and a change in a phase of channel information). Generally, the channel of the radio link is quantized and represented as channel information, such as CSI, in a communication protocol. In this way, the sending node 210 may initiate channel sounding to the receiving node 220 at a specific time interval, and may sense, based on a change of the CSI measured by the receiving node 220, whether a person is moving around and what specific action is being performed. Therefore, the technology may be widely applied to intrusion detection, elderly care, gesture recognition, breathing sleep detection, and the like.

There may be one or more sending nodes 210 and one or more receiving nodes 220, and the sending node 210 and the receiving node 220 may also be deployed in a same physical device. The sending node 210 may be the foregoing station or access point. Similarly, the receiving node 220 may be the foregoing station or access point. This is not limited in this application.

The sending node 210 may coordinate one or more receiving nodes to perform channel measurement, to obtain a motion status of a surrounding human body based on channel information. In FIG. 2, only a downlink sensing process in which the sending node 210 sends the sensing signal to the receiving node 220 is used as an example, but this is not limited in this application. For example, the sending node 210 may receive a sensing signal sent by the receiving node 220 to perform uplink sensing.

Compared with conventional sensing based on a camera or a wearable device, for example, a band, sensing based on a human body action through a radio wave has the following advantages: First, there is no hardware cost, and an existing wireless communication protocol, for example, Wi-Fi can already support measurement of interference to a radio channel in a CSI manner. Second, a user does not need to wear any device, and therefore interference to the user is small. It is convenient to monitor an elderly person, a child, and like, and also detect a non-cooperative target, for example, thief intrusion. Third, radio sensing has less impact on user privacy than the camera, and can be deployed in sensitive areas such as bedrooms and bathrooms. Fourth, radio sensing can still be effectively performed under poor illumination conditions and with obstacles such as curtains and wooden furniture, and can also perform multi-room sensing across walls. Finally, radio sensing has very high sensing precision, and can sense a tiny motion as weak as breathing at a centimeter scale.

Although radio sensing has the foregoing advantages, because the CSI can be obtained by any receiving device, an attacker can easily infer user behavior by using a method of obtaining the CSI by receiving a packet, and consequently user behavior privacy is easily leaked. Therefore, how to implement user security and privacy protection for radio sensing on the premise of coexistence with an existing wireless data transmission function is an important problem that needs to be resolved currently. In other words, technical effect to be implemented in this application is that interaction of security sensing measurement is implemented between the sending node and the receiving node, and an unauthorized node and the sending node and/or the receiving node may send a packet to each other, but the unauthorized node cannot detect information in a surrounding environment by measuring a channel change.

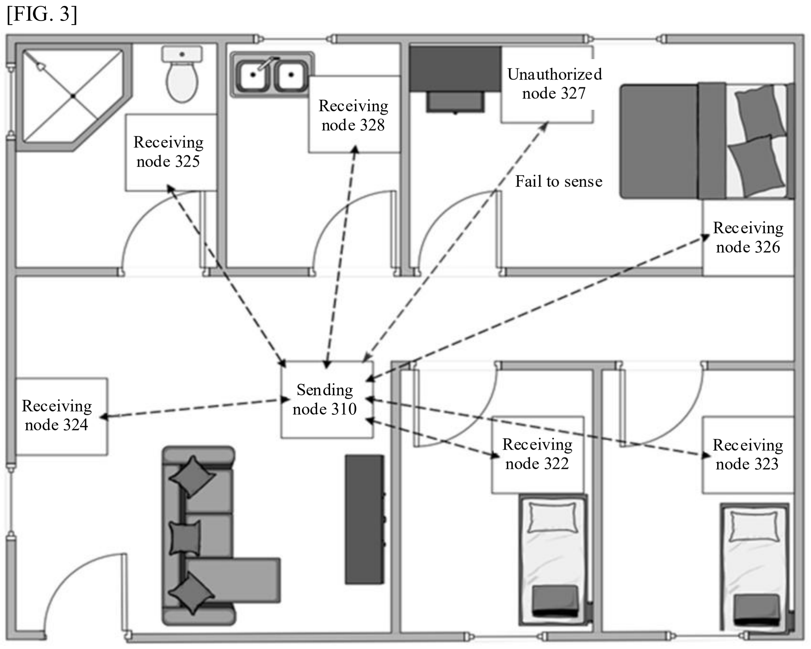

FIG. 3 is a diagram of an application scenario 300 according to an embodiment of this application. An application scenario of this application may be an indoor scenario, for example, a home environment or an office environment. An application scenario in the home environment is shown in FIG. 3. When this application is applied in the home environment, one sending node, for example, a wireless router, may be deployed. In addition, a plurality of wireless devices in the current home environment may be used as receiving nodes, as shown by a plurality of receiving nodes in the figure. The sending node may perform measurement interaction with the plurality of receiving nodes in the figure to monitor the entire home environment. For example, a link between a sending node 310 and a receiving node 325 may be used to measure an action status in a bathroom. In addition, the sending node 310 and receiving nodes 322, 323, and 326 in a bedroom may also monitor a sleep status of a user. In addition, even if an unauthorized node 327 can receive a packet from the sending node, the unauthorized node 327 cannot monitor the sleep status of the user in the bedroom.

It should be understood that a sensing target is not limited in this application, and may be at least one of a person, an object, an animal, and the like. Movement of a person, a gesture, movement of an object, an action of an animal, or the like may be sensed based on a change of channel information.

It should be noted that, in a trigger-based (TB-based) sounding mode, the sending node is an access point, and in an uplink sensing or downlink sensing process, the sending node 210 is responsible for calling a receiving node that performs sensing with the sending node 210, to trigger sensing measurement and send a sensing signal to the receiving node; or in a non-trigger based (non TB-based) sounding mode, the receiving node is an access point, and in an uplink sensing or downlink sensing process, there is no process in which the receiving node is called, and an opportunity to send a sensing signal is obtained by using a media access control (media access control, MAC) contention mechanism.

A WLAN system is used as an example. A sending node may send a null data packet (null data packet, NDP) to a receiving node. After receiving the NDP, the receiving node may perform CSI measurement based on a long training field (long training field, LTF) in the NDP. The LTF may be, for example, a legacy-LTF (Legacy-LTF) or a high-efficiency LTF (HE-LTF). In different protocol versions, the HE-LTF may be replaced with a very high throughput long training field (very high throughput LTF, VHT-LTF) or an extremely high throughput long training field (extremely high throughput LTF, EHT-LTF, and the like) To implement secure sensing, even if the unauthorized node cannot perform CSI measurement based on the LTF in the NDP, the sending node may scramble the LTF in the NDP, and the receiving node can implement CSI measurement only after correctly descrambling the LTF in the NDP. However, the unauthorized node cannot implement CSI measurement because the unauthorized node cannot descramble the LTF in the NDP. This implements secure sensing. However, when the LTF in the NDP is scrambled, another field in the NDP, for example, a short training symbol (short training field, STF), may still be used to implement CSI measurement, and the unauthorized node performs CSI measurement based on an unscrambled field. This cannot ensure sensing security.

Based on this, this embodiment of this application provides a scrambling solution of a sensing signal, to scramble more fields of the sensing signal (for example, an NDP), to ensure secure sensing.

The following describes the communication method provided in embodiments of this application with reference to the accompanying drawings.

It should be understood that, merely for ease of understanding and description, the following mainly uses interaction between a first device and a second device as an example to describe the method provided in embodiments of this application. The first device may be, for example, the sending node 210 in FIG. 2 or the sending node 310 in FIG. 3, and the second device may be the receiving node 220 in FIG. 1, or any one of the receiving nodes 322 to 326 and 328 in FIG. 3. Alternatively, the first device may be the receiving node 220 in FIG. 2 or any one of the receiving nodes 322 to 326 and 328 in FIG. 3, and the second device may be the sending node 210 in FIG. 2 or the sending node 310 in FIG. 3.

However, it should be understood that this should not constitute any limitation on an execution body of the method provided in this application. Any device that can perform, by using a program that can run code of the method provided in embodiments of this application, the method provided in embodiments of this application may be used as an execution body of the method provided in embodiments of this application. For example, the first device shown in the following embodiments may also be replaced with a component in the first device, for example, a chip, a chip system, or another functional module that can invoke a program and execute the program. The second device shown in the following embodiments may also be replaced with a component in the second device, for example, a chip, a chip system, or another functional module that can invoke a program and execute the program.

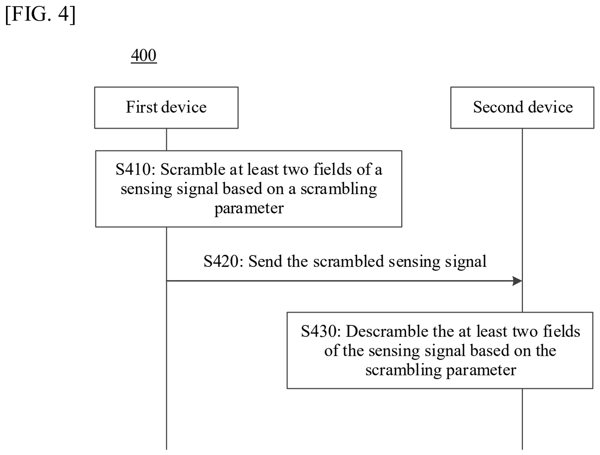

FIG. 4 is a schematic interaction flowchart of a communication method 400 according to an embodiment of this application. As shown in FIG. 4, the method 400 may include a part or all of processes in S410 to S430. The following describes the steps in the method 400.

S410: The first device scrambles at least two fields of a sensing signal based on a scrambling parameter.

S420: The first device sends the scrambled sensing signal to the second device. Correspondingly, the second device receives the scrambled sensing signal.

S430: The second device descrambles the at least two fields of the sensing signal based on the scrambling parameter.

The scrambling parameter may be a scrambling factor or a set of scrambling factors. For example, the scrambling parameter may include one or more scrambling sequences, the scrambling sequence may include one or more scrambling factors, one scrambling factor may be used to scramble one or more orthogonal frequency division multiplexing (orthogonal frequency division multiplexing, OFDM) symbols of the sensing signal, and/or one scrambling factor may be used to scramble one or more subcarriers of the sensing signal.

The sensing signal may include N protocol data units (presentation protocol data unit, PPDU), where N is a positive integer. In this embodiment of this application, scrambling or descrambling the sensing signal may include scrambling or descrambling each PPDU in the sensing signal. The PPDU may include a preamble (preamble) sequence. The PPDU may further include a data field. Alternatively, the PPDU may not include a data field. For example, the PPDU may be an NDP that does not include the data field. A field in the NDP may include a preamble sequence. The preamble sequence may include the foregoing STF, LTF, and the like. The LTF may include a legacy-LTF and an HE-LTF. When the first device scrambles one PPDU in the sensing signal, the first device may scramble at least two fields in the PPDU based on the scrambling parameter. For example, the first device scrambles a data field and an LTF field, or the first device scrambles an STF and an LTF, or the first device scrambles all fields, so that the scrambled PPDU is received by the second device for sensing measurement, and the scrambled PPDU cannot be descrambled after being received by an unauthorized node, and sensing measurement cannot be performed. It should be understood that more scrambled fields indicate that it is more difficult for the unauthorized node to implement sensing measurement based on the PPDU, and security of the sensing measurement is higher.

When scrambling each of the at least two fields of the sensing signal, the first device may scramble each

OFDM symbol in the field.

In this embodiment of this application, the first device scrambles OFDM symbols of the at least two fields of the sensing signal based on the scrambling parameter, and sends the scrambled sensing signal to the second device. The second device descrambles the at least two fields of the scrambled sensing signal based on the scrambling parameter, to implement sensing measurement and ensure security of the sensing measurement.

In some implementations, the first device scrambles the at least two fields of the sensing signal, and may implement scrambling in at least one dimension of a time sequence, an amplitude, and a phase. For any one of the N PPDUs, the PPDU may include M subcarriers, M is a positive integer, each OFDM symbol in the PPDU corresponds to the M subcarriers, and a sensing signal to which the PPDU belongs is carried on the M subcarriers. The following uses an example in which each OFDM of an $n^{th}$ PPDU is scrambled in three dimensions for description.

First, the first device determines a scrambling parameter used when scrambling is performed in three dimensions: a time sequence, an amplitude, and a phase.

When the scrambling parameter is used to scramble a sensing signal in the time sequence, the scrambling parameter may include a scrambling factor corresponding to each of the N PPDUs, and the scrambling parameter may be expressed as $S = [S(1), ... S(n), ... S(N)]$, where $S(n)$ is a scrambling factor corresponding to the $n^{th}$ PPDU. If the scrambling parameter is further used to scramble a sensing signal in frequency domain (for example, the amplitude and/or the phase), each PPDU may correspond to one scrambling sequence, that is, $S(n)$ is a scrambling sequence corresponding to the $n^{th}$ PPDU, each scrambling sequence includes scrambling factors respectively corresponding to the M subcarriers, and the $n^{th}$ scrambling sequence may be expressed as $S(n) = [S_1(n), ... S_m(n) ... S_M(n)]$. Scrambling factors corresponding to all subcarriers in the $n^{th}$ scrambling sequence may be the same or may be different. When the scrambling factors corresponding to the M subcarriers are all the same, the scrambling sequence corresponding to the $n^{th}$ PPDU may be understood as the scrambling factor corresponding to the $n^{th}$ PPDU. Certainly, the scrambling parameter may be used only to scramble the sensing signal in frequency domain (for example, the amplitude and/or the phase). In this case, the scrambling parameter may include a scrambling factor corresponding to each of the M subcarriers, and the scrambling parameter may be expressed as $S = [S_1, ... S_m, ... S_M]$.

A value of a scrambling factor of a 1st PPDU on an $m^{th}$ subcarrier is a preset value, for example, $S_m(1) = 1$. When scrambling is not performed at a frequency (the amplitude and/or the phase), S(1) = 1.

When any PPDU other than the 1st PPDU in the N PPDUs, that is, n is greater than 1, a scrambling factor of the $n^{th}$ PPDU on the $m^{th}$ subcarrier may be determined based on an LPC parameter. Refer to the following formula:

$$S_m(n) = \sum_{P=1}^{C} a_p S_m(n-p)$$

$a_p$ is a $P^{th}$-order linear prediction coefficient in the obtained LPC parameter, C is a total order of the LPC parameter, and $S_m(0)$ is a value of the $m^{th}$ subcarrier in a randomized LTF sequence of the 1st PPDU, for example, may be set to 1.

For example, the scrambling sequence S(n) corresponding to the $n^{th}$ PPDU is determined, where values of scrambling factors corresponding to all subcarriers in the scrambling sequence are the same, that is, $S_1(n) = \cdots = S_m(n) = \cdots = S_M(n)$. If values of the scrambling factors respectively corresponding to the M subcarriers are the same, that is $S_1(n) = \cdots = S_m(n) = \cdots = S_M(n)$, even if a scrambling factor on each subcarrier is generated based on an LPC parameter of an obfuscation action in a time sequence, scrambling factors of the $m^{th}$ subcarrier are $S_m(1)$, $S_m(2)$ ...$S_m(N)$ in the time sequence, after the N PPDUs are scrambled based on the foregoing scrambling factors, if after receiving a sensing signal, an unauthorized node may divide received CSI of each subcarrier by total received energy of all the subcarriers, and after normalization processing is completed, an amplitude of the scrambling factor disappears, and it is difficult to achieve an objective of secure sensing. Therefore, to improve security of sensing measurement, different scrambling factors are used for different subcarriers, and different randomly changing energy is introduced for each subcarrier.

The first device may randomly generate an amplitude variation for each subcarrier, and change a corresponding amplitude variation of a same initial scrambling factor of each of the M subcarriers generated by the $n^{th}$ PPDU in the scrambling sequence of the time sequence, so that a new scrambling factor of the subcarrier is formed. Optionally, the amplitude variation may be between 0.05 and -0.05. For example, an amplitude variation of the $m^{th}$ subcarrier may be determined according to the following formula:

$$\text{Amplitude\_shift\_value}_k = ((\sum_{i=0}^{L_1-1} amplitude - shifter_i \times 2^i) >> k - 2^{L_1-1}) \times 2^{-L_1-3}$$

*amplitude - shifter* is a binary value directly converted from a first character sequence, and $L_1$ is a length of the first character sequence. The foregoing formula may ensure that the amplitude variation $\text{Amplitude\_shift\_value}_k$ is between 0.05 and -0.05. Therefore, for an $m^{th}$ subcarrier in an $n^{th}$ packet, a new scrambling factor of the $m^{th}$ subcarrier is $S'_m(n)=S_m(n) * (1 - \text{Amplitude\_shift\_value}_k)$.

After the amplitude variation is introduced to the M subcarriers, a scrambling factor of each subcarrier changes only in amplitude. To ensure better security of the scrambling factor, the first device may further introduce a random phase to the scrambling factor that changes only in amplitude.

For a same PPDU, phase offsets of different subcarriers may be fitted into a straight line using the $m^{th}$ subcarrier as an independent variable. Therefore, not similar to the amplitude variation $\text{Amplitude\_shift\_value}_k$, an offset of the introduced random phase cannot generate a corresponding random change value for each subcarrier independently, but needs to meet a feature of a linear change of the $m^{th}$ subcarrier. Therefore, in this embodiment of this application, a time offset is first generated, and then a phase offset corresponding to each of the M subcarriers is determined based on the same time offset.

For a channel, the introduced time offset is equivalent to introducing a multipath that is $\tau$ longer than a line of sight (line of sight, LoS) path (path). Therefore, when the time offset is greater than or equal to a maximum delay spread (max delay spread), coherent bandwidth does not meet a requirement, resulting in ISI. Therefore, in this embodiment of this application, the time offset may be less than the maximum delay spread (max delay spread).

Based on this, the first device may first determine the same time offset of the M subcarriers according to the following formula:

$$\tau = (\sum_{i=0}^{L_2} phase\_shifter_i \times 2^i) \times max\_delay\_spread \times 2^{-L_2-3}$$

*phase_shifter* is a binary value directly converted from a second character sequence, and $L_2$ is a length of the second character sequence. The foregoing formula may ensure that a value of the time offset $\tau$ is less than the maximum delay spread.

For the m$^{th}$ subcarrier, a phase offset of the m$^{th}$ subcarrier may be: *phase_shift_value$_m$* = $2\pi(f + m\Delta f)\tau$, where *f* is a center frequency corresponding to a subcarrier 0, and $\Delta f$ is subcarrier bandwidth. Based on the phase offset, for the m$^{th}$ subcarrier of the n$^{th}$ PPDU, a new scrambling factor of the m$^{th}$ subcarrier is: $S''_m(n) = S'_m(n)e^{phase\_shift\_value_m}$.

Therefore, a scrambling factor of the n$^{th}$ PPDU is $S''(n) = [S''_1(n), ... S''_M(n)]$. After the n$^{th}$ PPDU is scrambled based on $S''(n)$, the n$^{th}$ PPDU used for secure sensing may be generated. The N PPDUs used for sensing are scrambled based on a corresponding scrambling factor sequence $S''(1)$, $S''(2)$, ... , $S''(N)$, so that secure sensing can be implemented.

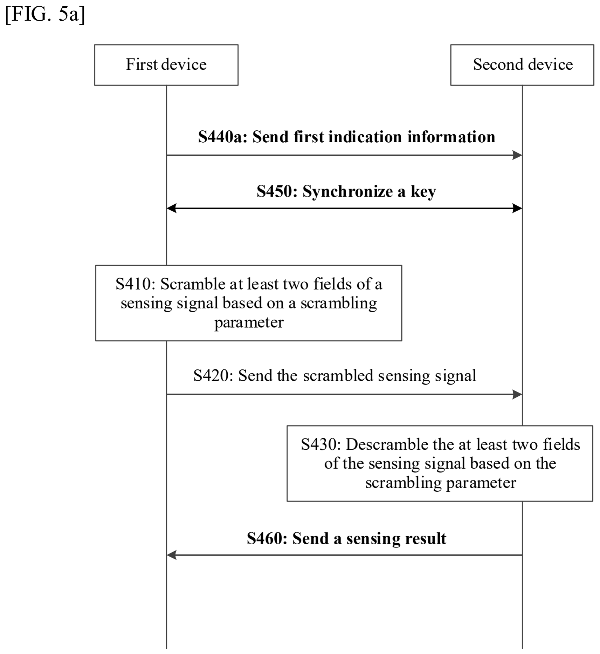

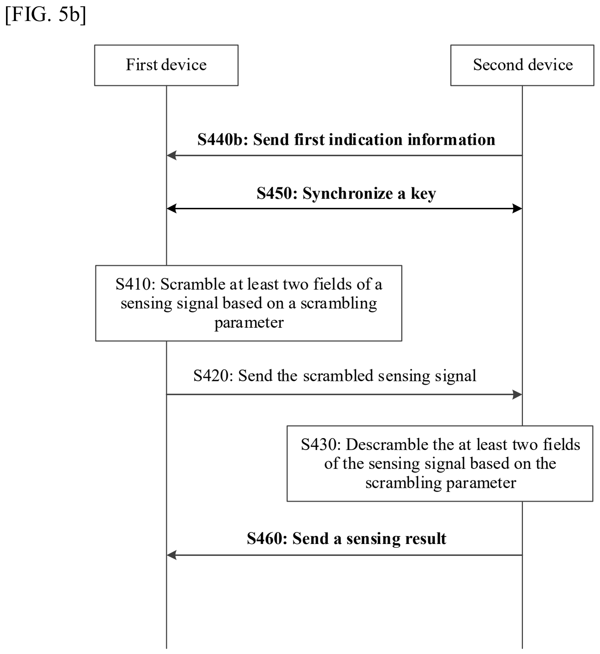

To enable the second device to descramble the scrambled sensing signal, the first device and the second device may synchronize the scrambling parameter, or synchronize related information for generating the scrambling parameter. In an example, refer to S440a in FIG. 5a. The first device may send first indication information to the second device, and indicate the scrambling parameter based on the first indication information. In this case, the first device may be a sending node, for example, 220 in FIG. 2 or 310 in FIG. 3. In other words, a process in which the first device sends the sensing signal to the second device is a downlink sensing process. In another example, refer to S440b in FIG. 5b. The second device may send first indication information to the first device, and indicate the scrambling parameter based on the indication information. In this case, the second device may be a sending node, for example, 220 in FIG. 2 or 310 in FIG. 3. In other words, a process in which the first device sends the sensing signal to the second device is an uplink sensing process.

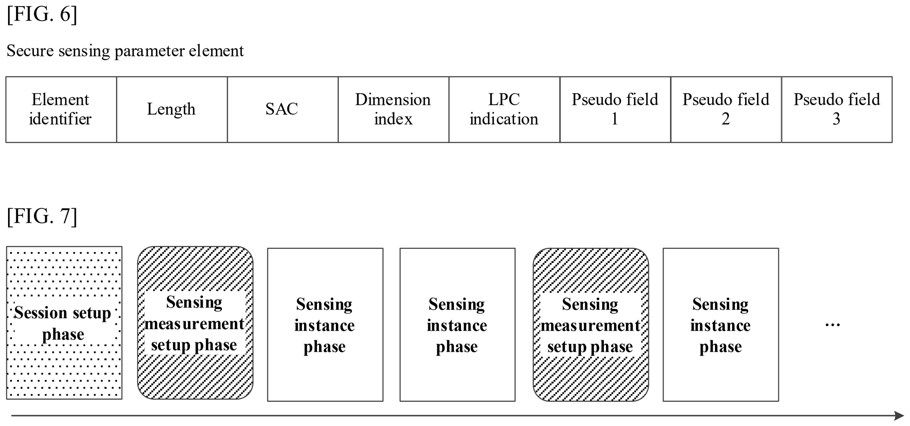

For example, the first indication information may include a part or all of fields in a secure sensing parameter element (secure sensing parameters element) shown in FIG. 6.

Refer to FIG. 6. A first field in the first indication information, or referred to as a pseudo (pseudo) field 1, includes an index of a pseudo-random sequence used for time sequence scrambling, and the first field may indicate the LPC parameter.

The pseudo-random sequence may be determined based on a sensing counter (secure-sense-counter) and a key synchronized between the first device and the second device. The sensing counter indicates a quantity of transmitted PPDUs in the sensing signal. The index of the pseudo-random sequence used for time sequence scrambling may be a start index and/or an end index in some sequences used for scrambling in the pseudo-random sequence. For example, the pseudo-random sequence includes 1024 bits, and the pseudo-random sequence used for time sequence scrambling may include a 33$^{rd}$ bit to a 90$^{th}$ bit. In this case, a start index may be 33, and an end index may be 90. Optionally, each of the start index and the end index may correspond to one group of LPC parameters. When the start index and the end index are the same, one group of LPC parameters is selected. When the start index is not equal to the end index, a plurality of groups of LPC parameters may be selected for scrambling.

That the first device determines the LPC parameter may include at least the following two implementations:

Manner 1: The first device may determine the corresponding LPC parameter in a pre-loaded or pre-generated codebook based on the first field. In the codebook, each entry includes two parameters <indexID, LPC>. indexID is an index value of the entry, a type of the parameter is positive integer, LPC is an LPC parameter of an action represented by the entry, a type of the parameter is array, and a length of the array is a generated order of the LPC. A process of generating the codebook may be determined by an ISTA device and an RSTA device. In this embodiment of this application, an algorithm for generating the codebook is not limited, provided that codebooks invoked by the ISTA and the RSTA are a same codebook. After invoking the codebooks, the ISTA and the RSTA search for an entry whose first field is indexID, and use an LPC parameter of the entry as a parameter for subsequently generating a scrambling factor.

Manner 2: The first device may determine the LPC parameter based on second indication information. The second indication information may directly indicate the LPC parameter, and the second indication information may be sent by an ISTA to an RSTA. In other words, when being the ISTA, the first device may send the second indication information to the second device to indicate the LPC parameter, and when being the ISTA, the second device may send the second indication information to the first device to indicate the LPC parameter. Optionally, the second indication information does not include a field in the secure sensing parameter element.

In the manner 1, because the first field occupies a small quantity of transmission resources, the LPC parameter is indicated in the codebook based on the first field, so that resource overheads can be reduced. In the manner 2, the LPC is directly indicated, and the node receiving the second indication information does not need to determine the LPC parameter based on the second indication information, thereby improving processing efficiency.

Refer to FIG. 6. An LPC indication (indicator) field in the first indication information indicates a manner of obtaining the LPC parameter. For example, the manner of obtaining the LPC parameter includes obtaining based on the codebook (for example, the foregoing manner 1) or indication by using the second indication information (for example, the foregoing manner 2).

Optionally, the first device may determine the LPC parameter based on a sensing result of a first time unit. The sensing result of the first time unit may be obtained by performing sensing measurement based on a signal sent in the first time unit, and the first time unit is earlier than a time unit occupied by the sensing signal. For example, based on the sensing signal sent in the first time unit, it is determined, through measurement, that a sensing target is "walking", and the first device may determine an LPC parameter of an obfuscation action corresponding to "walking".

A method for determining the LPC parameter of the obfuscation action by the ISTA may be selecting an encryption parameter based on action information in a current environment. For example, the ISTA may select an appropriate obfuscation gesture based on a gesture action that is being performed by a user in the current environment, to achieve optimal effect of interfering with the gesture. A method for obtaining the action information in the current environment by the ISTA may be: performing action identification and obtaining by feeding back a CSI report by the RSTA, or performing determining by directly feeding back the action information by the RSTA. For a specific feedback manner, refer to a specification in a related protocol. The ISTA may also determine the LPC parameter of the obfuscation action according to an internal algorithm of the ISTA, for example, randomly generate, based on current time, an environment history record, and the like, an LPC parameter that the ISTA considers appropriate, to scramble a channel.

Both the first indication information and the second indication information may be transmitted in an encrypted manner. For example, the first indication information and the second indication information are symmetrically encrypted based on a key (secure-sense-key), or encrypted based on another key shared by a receiving party and a sending party. The present invention does not specify a specific encryption scheme.

Refer to FIG. 6, a second field in the first indication information, or referred to as a pseudo (pseudo) field 2, includes an index of a pseudo-random sequence used for amplitude scrambling. The second field indicates an amplitude variation of at least one subcarrier (for example, an $m^{th}$ subcarrier) in the M subcarriers. For example, the index of the pseudo-random sequence used for amplitude scrambling may be the first character sequence. The amplitude variation of the $m^{th}$ subcarrier is used to adjust an $m^{th}$ scrambling factor in the M scrambling factors. A specific implementation is described above. For brevity, details are not described again. The index of the pseudo-random sequence used for amplitude scrambling is similar to the index of the pseudo-random sequence used for time sequence scrambling, and a difference lies in that the two indexes are different. For example, the pseudo-random sequence includes 1024 bits, a start index of the pseudo-random sequence used for time sequence scrambling may be 33, and an end index may be 90; and a start index of the pseudo-random sequence used for amplitude scrambling may be 95, and an end index may be 200.

Refer to FIG. 6. A third field in the first indication information, or referred to as a pseudo (pseudo) field 3, includes an index of a pseudo-random sequence used for phase scrambling, and the third field indicates the time offset. For example, the index of the pseudo-random sequence used for phase scrambling may be the second character sequence. For the index of the pseudo-random sequence used for phase scrambling, refer to the foregoing descriptions of the index of the pseudo-random sequence used for time sequence scrambling and the pseudo-random sequence used for amplitude scrambling. For brevity, details are not described again.

Refer to FIG. 6. A dimension index (dimension index) field in the first indication information may indicate at least one of the following:

whether the scrambling parameter is used to scramble the sensing signal in a time sequence dimension;
whether the scrambling parameter is used to scramble the sensing signal in an amplitude dimension; and
whether the scrambling parameter is used to scramble the sensing signal in a phase dimension.

For example, the dimension index field may include 3 bits, and each bit corresponds to one dimension. When a bit corresponding to the time sequence dimension is a first value, it indicates that the sensing signal is scrambled in the time sequence dimension. When a bit corresponding to the time sequence dimension is a second value, it indicates that the sensing signal is not scrambled in the time sequence dimension. The first value and the second value are not limited in this application. For example, the first value may be 1, and the second value may be 0. Scrambling indications in the amplitude dimension and the phase dimension are consistent with that in the time sequence dimension. For brevity, details are not described again.

Refer to FIG. 6. A fourth field in the first indication information, or referred to as an SAC field, indicates a sensing counter encrypted based on a key synchronized between the first device and the second device, and the sensing counter indicates a quantity of transmitted PPDUs in the sensing signal. For example, the SAC field includes a pseudo-random sequence, and the first device may determine the pseudo-random sequence according to a hash algorithm and based on the key and the sensing counter. For example, a pseudo-random sequence pseudo-random-seq=KDF-Hash-Length (secure-sense-key, "Secure LTF Expansion", secure-sense-counter), where KDF-Hash-Length() represents a hash function, and "Secure LTF Expansion" represents an LTF of a corresponding version, for example, may be a VHT-LTF, an HE-LTF, an EHT-LTF, or another LTF defined in a future Wi-Fi protocol. The second device may generate a pseudo-random sequence according to a hash algorithm and based on the synchronized key and the locally stored sensing counter (a manner in which the second device generates the pseudo-random sequence is the same as that of the first device).

It is assumed that, that the first device sends the sensing signal to the second device is a downlink sensing process. The first device may send the first indication information to the second device, to indicate, by the fourth field in the first indication information, a part or all of bits in the pseudo-random sequence generated by the first device. For example, the fourth field includes first 32 bits in the pseudo-random sequence. The second device compares the pseudo-random sequence generated by the second device with the received pseudo-random sequence sent by the first device, to verify the sensing counter. If the fourth field in the first indication information includes the first 32 bits in the pseudo-random sequence generated by the first device, the second device may compare first 32 bits in the pseudo-random sequence generated by the second device with the first 32 bits in the pseudo-random sequence in the fourth field in the received first indication information. If the pseudo-random sequence generated by the second device is consistent with the received pseudo-random sequence sent by the first device, it indicates that the sensing counter of the first device and the sensing counter of the second device are synchronous; or if the pseudo-random sequence generated by the second device is inconsistent with the received pseudo-random sequence sent by the first device, it indicates that the sensing counter of the first device and the sensing counter of the second device are not synchronized. In this case, the second device may adjust the sensing counter of the second device to be consistent with the sensing counter of the first device, or both the sensing counter of the second device and the sensing counter of the first device are set to zero, to ensure a time sequence of the PPDUs in the sensing measurement process.

It is assumed that, that the first device sends the sensing signal to the second device is an uplink sensing process. The second device may send the first indication information to the first device. The second device determines the pseudo-random sequence according to the hash algorithm and based on the key and the sensing counter, and indicates a part or all of the pseudo-random sequence to the first device by the fourth field in the first indication information. The first device compares the pseudo-random sequence generated by the first device with the pseudo-random sequence indicated by the fourth field, to verify the sensing counter. For a specific implementation, refer to the foregoing downlink sensing process. For brevity, details are not described again.

Refer to FIG. 6. The first indication information may further include an LPC indication field. The LPC indication field indicates a manner of obtaining the LPC parameter, and the manner of obtaining the LPC parameter includes obtaining based on a codebook or indication by using second indication information. For example, when the LPC indication field is a first value, it indicates that the second indication information indicates the LPC parameter; or when the LPC indication field is a second value, it indicates that the LPC parameter is obtained based on the codebook. Values of the first value and the second value are not limited in this embodiment of this application. For example, the first value may be 1, and the second value may be 0.

Refer to FIG. 6. The first indication information may further include an element identifier (element id) field. The first indication information may further include a length (length) field, and the field indicates a length of the first indication information.

Refer to FIG. 5a and FIG. 5b. This embodiment of this application may further include: S450: The first device synchronizes the key with the second device. For example, the first device may send a key to the second device, to synchronize the key between the first device and the second device; or the second device sends a key to the first device, to synchronize the key between the first device and the second device. This is not limited in this application.

The key may be used to generate the pseudo-random sequence. This is described in the foregoing example. For brevity, details are not described again.

The key may be used to encrypt information synchronized between the first device and the second device, and the information synchronized between the first device and the second device may include at least one of the first indication information, the second indication information, and the codebook.

The foregoing process of synchronizing the key may be completed in a session setup (session setup) phase in FIG. 7. For example, to implement secure sensing, when implementing session setup, the first device and the second device exchange a shared secure-sense-key during connection setup. For example, the ISTA includes a key in a connection setup request and sends the key to the RSTA. The two parties each generate a string of pseudo-random sequence with a fixed length based on the secure-sense-key, for subsequent secure sensing.

Refer to FIG. 7. In a sensing measurement setup (measurement setup) phase, the first device and the second device may exchange a sensing measurement setup request frame (sensing measurement setup request frame) and a sensing measurement setup response frame (sensing measurement setup response frame), to complete interaction of a sensing-related parameter. For example, when that the first device sends the sensing signal to the second device is a downlink sensing process, the first device may send the sensing measurement setup request frame to the second device, and the second device may send the sensing measurement setup response frame to the first device.

For example, the first indication information may be carried in first information, and the first information may be the sensing measurement setup request frame. The first information may indicate to generate the scrambling parameter based on the first indication information.

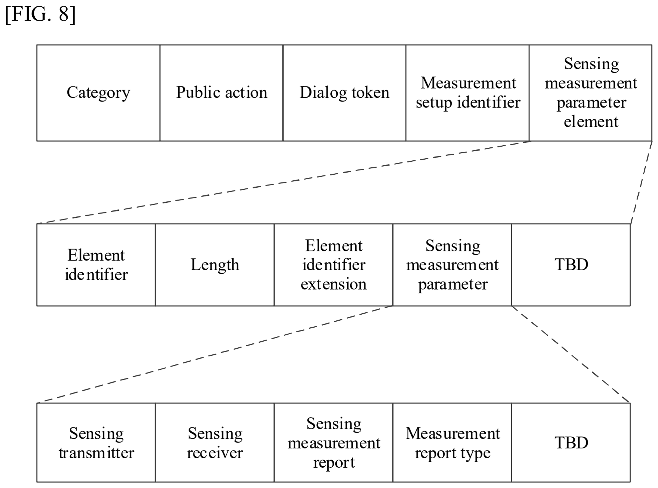

For example, FIG. 8 is a diagram of a structure of the sensing measurement setup request frame. Refer to FIG. 8, the sensing measurement setup request frame may include a category (category), a public action (public action), a dialog token (dialog token), a measurement setup identifier (measurement setup ID), and a sensing measurement parameter element (sensing measurement parameter element). The sensing measurement parameter element includes an element identifier (element ID), a length (length), an element identifier extension (element ID extension), a sensing measurement parameter (sensing measurement parameter), and a to-be-determined (TBD) field. The sensing measurement parameter may include a sensing transmitter (sensing transmitter), a sensing receiver (sensing receiver), a sensing measurement report (sensing measurement report), a measurement report type (measurement report type), and a TBD field. The first indication information may be used as an independent element, for example, a secure sensing parameter element (secure sensing parameter element), and is deployed in a sensing self-measurement supervision request frame, for example, deployed after the sensing measurement parameter element shown in FIG. 8. Alternatively, the first indication information may be combined into fields of an existing sensing measurement parameter element.

Refer to FIG. 7. In a sensing instance (measurement instance) (and/or a sensing result reporting (measurement reporting) phase), the first device and the second device separately scramble and descramble a sensing signal, and transmit the sensing signal. A specific implementation is described in the foregoing example. For brevity, details are not described again. In addition, in some embodiments, in the sensing instance phase, some control packets (or referred to as second information) may be further used to carry the first indication information, and the second information is used to update the current scrambling parameter, so that different scrambling parameters can be flexibly used for a plurality of consecutively sent PPDUs. This improves security of sensing measurement. In the downlink sensing process, the second information may be, for example, a null data packet announcement (null data packet announcement, NDPA) or a sensing polling (sensing polling) packet. In the uplink sensing process, the second information may be, for example, a trigger frame (trigger frame).

For example, if a first field in the second information is different from a first field in the first information, a sensing counter indicated by a fourth field in the second information is set to zero, to avoid impact of a change of the scrambling parameter in the time sequence dimension on a sensing time sequence in a sensing process.

In some embodiments, the second device may send a sensing result to the first device. Refer to S460 in FIG. 5a or FIG. 5b. For example, the second device may send the sensing result (sensing report) to the first device on a first time-frequency resource. Correspondingly, the first device may receive, on the first time-frequency resource, the sensing result sent by the second device, where the first time-frequency resource is used to transmit the sensing signal. In other words, the first device may send the sensing result in the first time-frequency resource allocated (or preempted) to the sensing signal. Certainly, this is not limited in this application. For example, the second device may send the sensing signal to the first device on a second time-frequency resource, and the second time-frequency resource may be a time-frequency resource allocated (or preempted) for the sensing result.

As described above, the first device and the second device may implement sensing measurement in the trigger-based (TB-based) sounding mode or the non TB-based (non TB-based) sounding mode.

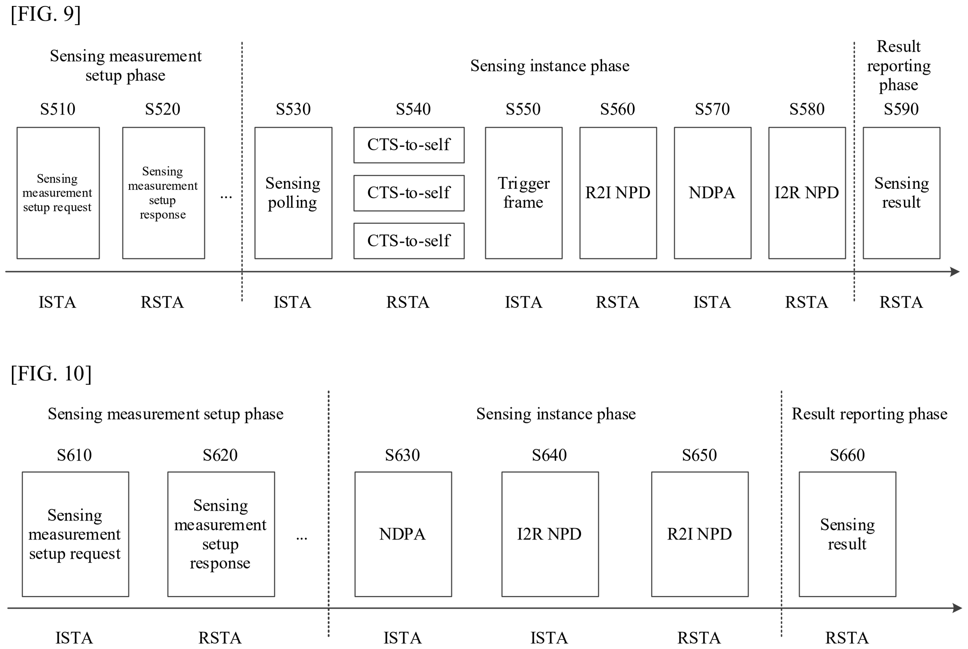

FIG. 9 is a schematic interaction flowchart of another communication method 500 according to an embodiment of this application. An example in which a PPDU in a sensing signal is an NDP is used to describe this application. When sensing measurement is performed in a TB-based sounding mode, the method 500 may include a part or all of processes in S510 to S590 in FIG. 9. S550 and S560 are an uplink sensing process. S570 and S580 are a downlink sensing measurement process. Either the uplink sensing process or the downlink sensing process may be performed, or the uplink sensing process and the downlink sensing process may be performed together. This is not limited in this application. In this embodiment of this application, interaction between an ISTA (for example, an AP) and an RSTA (for example, a STA) is used as an example for description. In the uplink sensing process, the ISTA is a second device, and the RSTA is a first device. In the downlink sensing process, the ISTA is a first device, and the RSTA is a second device.

Optionally, S510 and S520 in FIG. 9 may be steps in the sensing measurement setup phase in FIG. 7. S530 to S580 in FIG. 9 may be steps in the sensing instance phase in FIG. 7. S590 in FIG. 9 may be a step in the result reporting phase, or S590 in FIG. 9 may be completed in the sensing instance phase.

In S510, the ISTA sends a sensing measurement setup request frame to the RSTA, where the sensing measurement setup request frame carries first indication information, the first indication information carries a fourth field, and the fourth field may include a part or all of a pseudo-random sequence generated by the ISTA based on a sensing counter and a key, that is, the first indication information indicates the sensing counter, and the sensing counter indicated by the first indication information is 0.

In S520, the RSAT sends a sensing measurement setup response to the ISTA, where the sensing measurement setup response carries first indication information. A fourth field in the first indication information is consistent with the fourth field in the received sensing measurement setup request frame, to indicate that TB-based sensing measurement is agreed.

In S530, the ISTA starts one sensing measurement instance by performing sensing polling (sensing polling) on one or more RSTAs.

In S540, the one or more RSTAs send a clear to send (clear to send, CTS)-to-self message to the ISTA, to indicate that the one or more RSTAs participate in the current sensing measurement. The CTS-to-self message is a CTS frame sent to the RSTA, that is, a return address (return address, RA) in the frame is an address of the RSTA.

In S550, the ISTA sends a trigger frame, for example, a sensing sounding trigger frame (sensing sounding trigger frame), to the RSTA that participates in the sensing measurement. The sensing sounding trigger frame may carry the first indication information. When the first indication information is valid for all RSTAs, the first indication information may be carried in a common information (comm info) field in the sensing sounding trigger frame; or when the first indication information is valid for a specified RSTA, the first indication information is carried in a user information field (user info field) of a specified terminal in the sensing sounding trigger frame. In this case, the element ID field in the first indication information is replaced with an association identifier (association ID, AID) 11 (or an AID 12) that represents secure sensing, and the AID 11 (or the AID 12) indicates that the user info field is used for secure sensing. For example, when the AID 11 is a preset value (for example, 2041), it indicates that candidate information in the user info field indicates secure sensing. It should be noted that, for the sensing sounding trigger frame, the user information field may be used to carry information for different RSTAs. Each RSTA finds, based on an AID, a user information field corresponding to the RSTA. When a secure sensing parameter (for example, all or a part of the fields in the secure sensing parameter element) corresponding to each RSTA is allocated to each different RSTA, the user information field corresponding to the RTSA may be used to carry the secure sensing parameter of the RSTA. For a parameter shared by the different RSTAs, for example, when a same secure sensing parameter is configured for each RSTA, the secure sensing parameter may be carried the in common information field.

An SAC field in the first indication information is determined based on a current sensing counter. The first indication information may include an optional field in the secure sensing parameter element, or may not include an optional field in the secure sensing parameter element. The optional field in the secure sensing parameter element may include at least one of the first field, the second field, the third field, the dimension index field, and the LPC indication field. A field other than the optional field in the secure sensing parameter element is a mandatory field. For example, at least one of an SAC field, an element identifier field, and a length field is a mandatory field.

When the first indication information does not include an optional field, for example, does not include the first field, the second field, the third field, the dimension index field, or the LPC indication field, only the SAC field is provided for synchronizing the scrambling parameter. In this case, the NDP sent by the RSTA to the ISTA, that is, the scrambling parameter of the R2I NDP, remains unchanged. The RSTA determines, based on the SAC field, whether a sensing counter of the RSTA is consistent with that of the ISTA. If the RSTA determines that the two sensing counters are inconsistent, the RSTA increases or decreases counting of the sensing counter of the RSTA, so that the sensing counter of the RSTA is synchronized with the sensing counter of the ISTA. In addition, the RSTA uses the scrambling parameter indicated by the first indication information in S510.

When the first indication information includes an optional field, for example, includes at least one of the first field, the second field, the third field, the dimension index field, and the LPC indication field, it indicates that the scrambling parameter needs to be updated in at least one scrambling dimension. The ISTA may update the scrambling parameter based on the first indication information. In some embodiments, if the optional field of the first indication information includes the first field, that is, the scrambling parameter needs to be updated in the time sequence dimension, both the sensing counter of the ISTA and the sensing counter of the RSTA are set to 0, to avoid time sequence disorder of the sensing signal.

In S560, after scrambling each OFDM symbol of the R2I NDP based on the scrambling parameter of the current sensing measurement, each RSTA sends the scrambled R2I NDP to the ISTA. After the scrambled R2I NDP is sent, the sensing counter is increased by 1. After receiving the scrambled R2I NDP, the ISTA descrambles the R2I NDP based on the scrambling parameter of the current sensing measurement, to obtain a channel measurement result. After the sensing measurement is completed, the ISTA increases the sensing counter of the ISTA by 1.

In S570, the ISTA may send an NDPA to start a downlink sensing process. The NDPA may carry the first indication information. When the first indication information is valid for all RSTAs, the first indication information may be carried in a comm info field in the sensing sounding trigger frame; or when the first indication information is valid for a specified RSTA, the first indication information is carried in a user info field of a specified terminal in the sensing sounding trigger frame. In this case, the element ID field in the first indication information is replaced with an AID 11 (or an AID 12) that represents secure sensing, and the AID 11 (or the AID 12) indicates that the user info field is used for secure sensing.

The first indication information carried in the NDPA is similar to the first indication information carried in the sensing sounding trigger frame in S550, and S570 and S550 have a same or similar implementation. For brevity, details are not described again.

In S580, after scrambling each OFDM symbol of the I2R NDP based on the scrambling parameter of the current sensing measurement, each ISTA sends the scrambled I2R NDP to the RSTA. After the scrambled I2R NDP is sent, the sensing counter is increased by 1. After receiving the scrambled I2R NDP, the RSTA descrambles the I2R NDP based on the scrambling parameter of the current sensing measurement, to obtain a channel measurement result. After the sensing measurement is completed, the RSTA increases the sensing counter of the RSTA by 1.

In S590, the RSTA may report a sensing result to the ISTA in the subsequent sensing result reporting phase. Alternatively, the RSTA may complete reporting of the sensing result in the sensing measurement instance phase. The RSTA may separately send a sensing result of each sensing measurement, or may combine sensing results of a plurality of sensing measurements and send the sensing results together. This is not limited in this application.

The foregoing S530 to S590 are repeated, so that a plurality of sensing measurement instances can be implemented, to achieve an objective of transmitting a plurality of NDPs, so as to obtain a sufficient quantity of packets used for sensing.

Optionally, in S580, the RSTA may not perform a descrambling operation, and directly feed back the scrambled measurement result (for example, may be an unscrambled I2R NDP) in S590. After receiving the measurement result in S590, the ISTA determines the scrambling parameter based on the sensing counter, and descrambles the result based on the scrambling parameter. In this case, the RSTA cannot obtain a real channel parameter, and only the ISTA can descramble the measurement result. Therefore, security is higher. In this embodiment, the ISTA may set the SAC field in the first indication information to all 0s, to indicate that the RSTA does not need to be descrambled in this sensing measurement. The ISTA may also use the pseudo-random sequence to enable the RSTA to perform descrambling based on an incorrect descrambling parameter. Finally, after obtaining a measurement result, the ISTA cancels the incorrect descrambling of the RSTA and performs correct descrambling again.

FIG. 10 is a schematic interaction flowchart of another communication method 600 according to an embodiment of this application. An example in which a PPDU in a sensing signal is an NDP is still used to describe this application. When sensing measurement is performed in a non TB-based sounding mode, the method 600 may include a part or all of processes in S610 to S660 in FIG. 10. In this embodiment of this application, interaction between an ISTA (for example, a non-AP STA) and an RSTA (for example, an AP) is used as an example for description. In an uplink sensing process, the ISTA is a second device, and the RSTA is a first device. In a downlink sensing process, the ISTA is a first device, and the RSTA is a second device.

S610 and S620 are respectively similar to S510 and S520 in the embodiment shown in FIG. 9, and S660 is similar to S590 in the embodiment shown in FIG. 9. Details are not described herein again.

In S630, at specific time, the ISTA determines that the ISTA needs to perform sensing measurement, that is, sends an NDPA. The NDPA includes a station information field (STA Info field) for secure sensing, and a structure of the station information field may be consistent with that of a secure sensing parameter element. Only an element ID is replaced with an AID 11 indicating that the STA Info field is used for secure sensing. An optional field in the secure sensing parameter element may be included or not included. When the STA info field in the NDPA includes or does not include the optional field in the secure sensing parameter element, for a specific implementation, refer to S570 in the foregoing example.

In S640, the ISTA scrambles each OFDM symbol of the I2R NDP based on the scrambling parameter of the current sensing measurement, and sends the I2R NDP to the RSTA. The RSTA descrambles the I2R NDP based on the scrambling parameter of the current sensing measurement.

In S650, the RSTA scrambles each OFDM symbol of the R2I NDP based on a scrambling parameter consistent with that of the ISTA, and sends the R2I NDP to the ISTA. The ISTA descrambles the R2I NDP based on the scrambling parameter of the current sensing measurement. After this step, both the ISTA and the RSTA increase Secure-sense-Counter by 1.

The foregoing S630 to S650 are repeated, so that a plurality of sensing measurement instances can be implemented, to achieve an objective of transmitting a plurality of NDPs, so as to obtain a sufficient quantity of packets used for sensing.

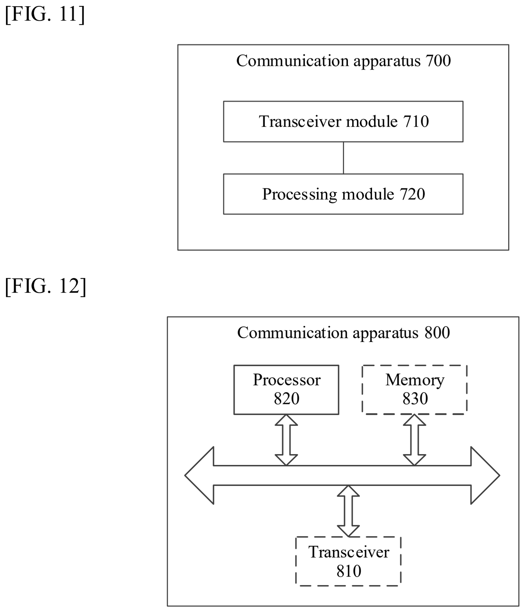

FIG. 11 is a block diagram of a communication apparatus according to an embodiment of this application. As shown in FIG. 11, an apparatus 700 may include a processing module 710 and a transceiver module 720.

Optionally, the communication apparatus 700 may correspond to the first device in the foregoing method embodiments, for example, may be the first device or a component (for example, a chip or a chip system) configured in the first device.

When the communication apparatus 700 is configured to perform a method on a first device side, the processing module 710 may be configured to scramble at least two fields of a sensing signal based on a scrambling parameter; and the transceiver module 720 is configured to send the scrambled sensing signal to a second device.

Optionally, the communication apparatus 700 may correspond to the second device in the foregoing method embodiments, for example, may be the second device or a component (for example, a chip or a chip system) configured in the second device.

When the communication apparatus 700 is configured to perform a method on a second device side, the transceiver module 720 is configured to receive a scrambled sensing signal sent by a first device, where at least two fields of the sensing signal are scrambled based on a scrambling parameter; and the processing module 710 is configured to descramble the at least two fields of the sensing signal based on the scrambling parameter.

It should be understood that specific processes performed by the modules are described in detail in the foregoing method embodiments. For brevity, details are not described herein again.

The transceiver module 720 in the communication apparatus 700 may be implemented by using a transceiver, for example, may correspond to a transceiver 810 in a communication apparatus 800 shown in FIG. 12. The processing module 710 in the communication apparatus 700 may be implemented by using at least one processor, for example, may correspond to a processor 820 in the communication apparatus 800 shown in FIG. 12.

When the communication apparatus 700 is a chip or a chip system configured in a communication device (for example, a first device or a second device), the transceiver module 720 in the communication apparatus 700 may be implemented by using an input/output interface, a circuit, or the like, and the processing module 710 in the communication apparatus 700 may be implemented by using a processor, a microprocessor, an integrated circuit, or the like integrated on the chip or the chip system.

FIG. 12 is a block diagram of another communication apparatus according to an embodiment of this application. As shown in FIG. 12, a communication apparatus 800 may include: a transceiver 810, a processor 820, and a memory 830. The transceiver 810, the processor 820, and the memory 830 communicate with each other through an internal connection channel. The memory 830 is configured to store instructions. The processor 820 is configured to execute the instructions stored in the memory 830, to control the transceiver 810 to send a signal and/or receive a signal.

It should be understood that the communication apparatus 800 may correspond to the first device or the second device in the foregoing method embodiments, and may be configured to perform the steps and/or procedures performed by the first device or the second device in the foregoing method embodiments. Optionally, the memory 830 may include a read-only memory and a random access memory, and provide instructions and data to the processor. A part of the memory may further include a non-volatile random access memory. The memory 830 may be an independent component, or may be integrated into the processor 820. The processor 820 may be configured to execute the instructions stored in the memory 830. When the processor 820 executes the instructions stored in the memory, the processor 820 is configured to perform the steps and/or procedures corresponding to the first device or the second device in the foregoing method embodiments.

Optionally, the communication apparatus 800 is the first device in the foregoing embodiments.

Optionally, the communication apparatus 800 is the second device in the foregoing embodiments.

The transceiver 810 may include a transmitter and a receiver. The transceiver 810 may further include an antenna. There may be one or more antennas. The processor 820, the memory 830, and the transceiver 810 may be components integrated into different chips. For example, the processor 820 and the memory 830 may be integrated into a baseband chip, and the transceiver 810 may be integrated into a radio frequency chip. The processor 820, the memory 830, and the transceiver 810 may alternatively be components integrated into a same chip. This is not limited in this application.

Optionally, the communication apparatus 800 is a component configured in the first device, for example, a chip or a chip system.

Optionally, the communication apparatus 800 is a component configured in the second device, for example, a chip or a chip system.

The transceiver 810 may alternatively be a communication interface, for example, an input/output interface or a circuit. The transceiver 810, the processor 820, and the memory 830 may be all integrated into a same chip, for example, integrated into a baseband chip.

This application further provides a processing apparatus, including at least one processor. The at least one processor is configured to execute a computer program stored in a memory, so that the processing apparatus performs the method performed by the first device or the second device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the first device or the second device in the foregoing method embodiments.

An embodiment of this application further provides a processing apparatus, including a processor and a memory. The memory is configured to store a computer program. The processor is configured to invoke the computer program from the memory and run the computer program, so that the processing apparatus performs the method performed by the first device or the second device in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logic circuit in the processor, or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to perform the method performed by the first device or the second device in the foregoing method embodiments.

According to the method provided in embodiments of this application, this application further provides a computer-readable storage medium. The computer-readable storage medium stores program code. When the program code is run on a computer, the computer is enabled to perform the method performed by the first device or the second device in the foregoing method embodiments.

According to the method provided in embodiments of this application, this application further provides a communication system. The communication system may include the first device and the second device described above.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing module, or each of the units may exist alone physically, or two or more units are integrated into one unit.

When the functions are implemented in the form of a software functional unit and sold or used as an independent product, the functions may be stored in a computer-readable storage medium. Based on such an understanding, a part contributing to the technical solutions in this application, or a part of the technical solutions may be embodied in a form of a software product. The computer software product is stored in a storage medium, and includes several instructions for instructing a computer device (which may be a personal computer, a server, a second device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   scrambling, by a first device, at least two fields of a sensing signal based on a scrambling parameter; and
   sending, by the first device, the scrambled sensing signal to a second device.

2. The method according to claim 1, further comprising:
   sending, by the first device, first indication information to the second device, wherein the first indication information indicates the scrambling parameter.

3. The method according to claim 1, further comprising:
   receiving, by the first device, first indication information sent by the second device, wherein the first indication information indicates the scrambling parameter.

4. The method according to claim 2 or 3, wherein a first field in the first indication information comprises an index of a pseudo-random sequence used for time sequence scrambling, the first field indicates a linear predictive coding LPC parameter, the LPC parameter is used to determine N scrambling sequences respectively corresponding to N PPDUs of the sensing signal, and N is a positive integer.

5. The method according to any one of claims 2 to 4, wherein a second field in the first indication information comprises an index of a pseudo-random sequence used for amplitude scrambling, the second field indicates an amplitude variation of an $m^{th}$ subcarrier in M subcarriers of the sensing signal, M is a positive integer, the amplitude variation of the $m^{th}$ subcarrier is used to adjust an $m^{th}$ scrambling factor in M scrambling factors, and the $m^{th}$ scrambling factor is used to scramble the $m^{th}$ subcarrier.

6. The method according to any one of claims 2 to 5, wherein a third field in the first indication information comprises an index of a pseudo-random sequence used for phase scrambling, the third field indicates a time offset, the time offset is used to determine a phase offset of the $m^{th}$ subcarrier in the M subcarriers of the sensing signal, and M is a positive integer.

7. The method according to claim 6, wherein the time offset is less than or equal to a maximum delay spread of a channel carrying the sensing signal.

8. The method according to any one of claims 2 to 7, wherein a dimension index field in the first indication information indicates at least one of the following:

   whether the scrambling parameter is used to scramble the sensing signal in a time sequence dimension;
   whether the scrambling parameter is used to scramble the sensing signal in an amplitude dimension; and
   whether the scrambling parameter is used to scramble the sensing signal in a phase dimension.

9. The method according to any one of claims 2 to 8, wherein an LPC indication field in the first indication information indicates a manner of obtaining the LPC parameter, and the manner of obtaining the LPC parameter comprises obtaining based on a codebook or indication by using second indication information.

10. The method according to any one of claims 2 to 9, wherein a fourth field in the first indication information indicates a sensing counter encrypted based on a key synchronized between the first device and the second device, and the sensing counter indicates a quantity of transmitted PPDUs in the sensing signal.

11. The method according to any one of claims 1 to 10, wherein the first device sends a key to the second device; or the first device receives a key sent by the second device; and
the key is configured to:

   generate a pseudo-random sequence; and/or
   encrypt information synchronized between the first device and the second device.

12. The method according to claim 11, wherein the key is comprised in a connection setup request.

13. The method according to any one of claims 2 to 10, wherein

   the first indication information is carried in first information and/or second information;
   the first information indicates to generate the scrambling parameter; and
   the second information indicates to update the scrambling parameter.

14. The method according to claim 13, wherein the first information is a sensing measurement setup request frame.

15. The method according to claim 13 or 14, wherein the second information is a null data packet announcement or a trigger frame.

16. The method according to any one of claims 13 to 15, wherein a first field in the second information is different from a first field in the first information, and a sensing counter indicated by a fourth field in the second information is set to zero.

17. The method according to any one of claims 1 to 16, wherein the method further comprises:
receiving, by the first device, a sensing result sent by the second device, wherein the sensing result occupies a first time-frequency resource, and the first time-frequency resource is used to transmit the sensing signal.

18. A communication method, comprising:

   receiving, by a second device, a scrambled sensing signal sent by a first device, wherein at least two fields of the sensing signal are scrambled based on a scrambling parameter; and
   descrambling, by the second device, the at least two fields of the sensing signal based on the scrambling parameter.

19. The method according to claim 18, wherein the method further comprises:
receiving, by the second device, first indication information sent by the first device, wherein the first indication information indicates the scrambling parameter.

20. The method according to claim 18, wherein the method further comprises:
sending, by the second device, first indication information to the first device, wherein the first indication information indicates the scrambling parameter.

21. The method according to claim 19 or 20, wherein a first field in the first indication information comprises an index of a pseudo-random sequence used for time sequence scrambling, the first field indicates a linear predictive coding LPC parameter, the LPC parameter is used to determine N scrambling sequences respectively corresponding to N PPDUs of the sensing signal, and N is a positive integer.

22. The method according to any one of claims 19 to 21, wherein a second field in the first indication information comprises an index of a pseudo-random sequence used for amplitude scrambling, the second field indicates an amplitude variation of an $m^{th}$ subcarrier in M subcarriers of the sensing signal, M is a positive integer, the amplitude variation of the $m^{th}$ subcarrier is used to adjust an $m^{th}$ scrambling factor in M scrambling factors, and the $m^{th}$ scrambling factor is used to descramble the $m^{th}$ subcarrier.

23. The method according to any one of claims 19 to 22, wherein a third field in the first indication information comprises an index of a pseudo-random sequence used for phase scrambling, the third field indicates a time offset, the time offset is used to determine a phase offset of the $m^{th}$ subcarrier in the M subcarriers of the sensing signal, and M is a positive integer.

24. The method according to claim 23, wherein the time offset is less than or equal to a maximum delay spread of a channel carrying the sensing signal.

25. The method according to any one of claims 19 to 24, wherein a dimension index field in the first indication information indicates at least one of the following:

whether the scrambling parameter is used to scramble the sensing signal in a time sequence dimension;
whether the scrambling parameter is used to scramble the sensing signal in an amplitude dimension; and
whether the scrambling parameter is used to scramble the sensing signal in a phase dimension.

26. The method according to any one of claims 19 to 25, wherein an LPC indication field in the first indication information indicates a manner of obtaining the LPC parameter, and the manner of obtaining the LPC parameter comprises obtaining based on a codebook or indication by using second indication information.

27. The method according to any one of claims 19 to 26, wherein a fourth field in the first indication information indicates a sensing counter encrypted based on a key synchronized between the first device and the second device, and the sensing counter indicates a quantity of transmitted PPDUs in the sensing signal.

28. The method according to any one of claims 18 to 27, wherein the second device receives a key sent by the first device; or the second device sends a key to the first device; and
the key is configured to:

generate a pseudo-random sequence; and/or
encrypt information synchronized between the first device and the second device.

29. The method according to claim 28, wherein the key is comprised in a connection setup request.

30. The method according to any one of claims 19 to 27, wherein

the first indication information is carried in first information and/or second information;
the first information indicates to generate the scrambling parameter; and
the second information indicates to update the scrambling parameter.

31. The method according to claim 30, wherein the first information is a sensing measurement setup request frame.

32. The method according to claim 30 or 31, wherein the second information is a null data packet announcement or a trigger frame.

33. The method according to any one of claims 30 to 32, wherein a first field in the second information is different from a first field in the first information, and a sensing counter indicated by a fourth field in the second information is set to zero.

34. The method according to any one of claims 18 to 33, wherein the method further comprises:
sending, by the second device, a sensing result to the first device, wherein the sensing result occupies a first time-frequency resource, and the first time-frequency resource is used to transmit the sensing signal.

35. A communication apparatus, comprising a module configured to perform the method according to any one of claims 1 to 17 or comprising a module configured to perform the method according to any one of claims 18 to 34.

36. A communication device, comprising a processor and a memory, wherein the memory is configured to store a computer program, and the processor is configured to invoke and run the computer program stored in the memory, to perform the method according to any one of claims 1 to 34.

37. A chip, comprising a processor, configured to invoke computer instructions from a memory and run the computer instructions, to enable a device in which the chip is installed to perform the method according to any one of claims 1 to 34.

38. A computer-readable storage medium, configured to store computer program instructions, wherein the computer program enables a computer to perform the method according to any one of claims 1 to 34.

39. A computer program product, comprising computer program instructions, wherein the computer program instructions enable a computer to perform the method according to any one of claims 1 to 34.

[FIG. 1]

Communication system 100

[FIG. 2]

Sending node 210

Sensing target 230

Direct signal 201

Receiving node 220

Reflected signal 202

[FIG. 3]

[FIG. 4]

400

```
┌─────────────────┐                              ┌──────────────────┐
│   First device  │                              │  Second device   │
└────────┬────────┘                              └────────┬─────────┘
         │                                                │
┌────────┴──────────────────────────┐                     │
│ S410: Scramble at least two fields │                     │
│ of a sensing signal based on a     │                     │
│ scrambling parameter               │                     │
└────────┬──────────────────────────┘                     │
         │    S420: Send the scrambled sensing signal      │
         │───────────────────────────────────────────────▶│
         │                          ┌─────────────────────┴──────────────┐
         │                          │ S430: Descramble the at least two  │
         │                          │ fields of the sensing signal based │
         │                          │ on the scrambling parameter        │
         │                          └─────────────────────┬──────────────┘
         │                                                │
```

[FIG. 5a]

[FIG. 5b]

| First device | | Second device |
|---|---|---|

**S440b: Send first indication information**

**S450: Synchronize a key**

S410: Scramble at least two fields of a sensing signal based on a scrambling parameter

S420: Send the scrambled sensing signal

S430: Descramble the at least two fields of the sensing signal based on the scrambling parameter

**S460: Send a sensing result**

[FIG. 6]

Secure sensing parameter element

| Element identifier | Length | SAC | Dimension index | LPC indication | Pseudo field 1 | Pseudo field 2 | Pseudo field 3 |
|---|---|---|---|---|---|---|---|

[FIG. 7]

| Session setup phase | Sensing measurement setup phase | Sensing instance phase | Sensing instance phase | Sensing measurement setup phase | Sensing instance phase | ... |
|---|---|---|---|---|---|---|

[FIG. 8]

| Category | Public action | Dialog token | Measurement setup identifier | Sensing measurement parameter element |
|---|---|---|---|---|

| Element identifier | Length | Element identifier extension | Sensing measurement parameter | TBD |
|---|---|---|---|---|

| Sensing transmitter | Sensing receiver | Sensing measurement report | Measurement report type | TBD |
|---|---|---|---|---|

[FIG. 9]

Sensing measurement
setup phase

Sensing instance phase

Result
reporting
phase

| S510 | S520 | | S530 | S540 | S550 | S560 | S570 | S580 | S590 |
|------|------|---|------|------|------|------|------|------|------|
| Sensing measurement setup request | Sensing measurement setup response | ... | Sensing polling | CTS-to-self / CTS-to-self / CTS-to-self | Trigger frame | R2I NPD | NDPA | I2R NPD | Sensing result |
| ISTA | RSTA | | ISTA | RSTA | ISTA | RSTA | ISTA | RSTA | RSTA |

EP 4 694 250 A1

[FIG. 10]

Sensing measurement setup phase

Sensing instance phase

Result reporting phase

| S610 | S620 | | S630 | S640 | S650 | S660 |
|------|------|---|------|------|------|------|
| Sensing measurement setup request | Sensing measurement setup response | ... | NDPA | I2R NPD | R2I NPD | Sensing result |
| ISTA | RSTA | | ISTA | ISTA | RSTA | RSTA |

[FIG. 11]

Communication apparatus 700

Transceiver module 710

Processing module 720

[FIG. 12]

Communication apparatus 800

Processor 820

Memory 830

Transceiver 810

## INTERNATIONAL SEARCH REPORT

| International application No. |
| --- |
| **PCT/CN2024/088748** |

**A. CLASSIFICATION OF SUBJECT MATTER**

H04W12/033(2021.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS: CNTXT, VEN; ENTXTC; CNKI: 感知, 安全, 保护, 隐私, 不同, 多, 至少两个, 数据, 服务, 信令, 字段, 序列, 符号, 干扰, 加扰, 扰码, 解扰, 指示, 参数, NDP, PPDU, STF, LTF, awareness, security, protection, privacy, different, multi, at least two, data, service, signaling, field, sequence, signal, scrambled, descrambled, indication, parameter

**C. DOCUMENTS CONSIDERED TO BE RELEVANT**

| Category* | Citation of document, with indication, where appropriate, of the relevant passages | Relevant to claim No. |
| --- | --- | --- |
| X | CN 113572571 A (HUAWEI TECHNOLOGIES CO., LTD.) 29 October 2021 (2021-10-29) description, paragraphs [125]-[247] | 1-39 |
| A | CN 115484606 A (HUAWEI TECHNOLOGIES CO., LTD.) 16 December 2022 (2022-12-16) entire document | 1-39 |
| A | CN 115136548 A (QUALCOMM INC.) 30 September 2022 (2022-09-30) entire document | 1-39 |
| A | WO 2022262688 A1 (HUAWEI TECHNOLOGIES CO., LTD.) 22 December 2022 (2022-12-22) entire document | 1-39 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 June 2024** | **24 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/088748**

| Patent document cited in search report | | | Publication date (day/month/year) | Patent family member(s) | | | Publication date (day/month/year) |
|---|---|---|---|---|---|---|---|
| CN | 113572571 | A | 29 October 2021 | None | | | |
| CN | 115484606 | A | 16 December 2022 | None | | | |
| CN | 115136548 | A | 30 September 2022 | BR | 112022016290 | A2 | 04 October 2022 |
| | | | | EP | 4111652 | A1 | 04 January 2023 |
| | | | | KR | 20220137916 | A | 12 October 2022 |
| | | | | TW | 202141950 | A | 01 November 2021 |
| | | | | US | 2021266204 | A1 | 26 August 2021 |
| | | | | US | 11509508 | B2 | 22 November 2022 |
| | | | | WO | 2021173389 | A1 | 02 September 2021 |
| WO | 2022262688 | A1 | 22 December 2022 | BR | 112023026238 | A2 | 05 March 2024 |
| | | | | EP | 4354744 | A1 | 17 April 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310443093